# EUROPÄISCHE PATENTANMELDUNG

(11) **EP 4 494 940 A1**
(43) Veröffentlichungstag der Anmeldung: **22.01.2025**
(21) Anmeldenummer: 23186976.9
(22) Anmeldetag: 21.07.2023
(51) Int. Cl.: B60Q 1/00, B60Q 1/26, F21S 41/151, F21S 41/24, F21S 41/33, F21S 43/14, F21S 43/15, F21S 43/239, F21S 43/245, F21S 43/249, F21S 43/31, F21S 43/40, F21S 43/20, B60Q 1/12, F21W 102/19, F21W 103/10, F21W 103/35

(54) **BELEUCHTUNGSVORRICHTUNG FÜR EINE KRAFTFAHRZEUGLEUCHTE**

(71) Anmelder: ZKW Group GmbH, 3250 Wieselburg (AT)
(72) Erfinder: Hajduk, Peter, 023 02 Krásno nad Kysucou (SK); Hamar, Martin, 77900 Olomouc (CZ); Tomecek, Michal, 74801 Hlucín (CZ); Jahn, Jirí, 74744 Brezová (CZ); Maier, Christian, 3281 Oberndorf an der Melk (AT); Muellauer, Christian, 3213 Frankenfels (AT); Fallmann, Dominik, 3295 Lackenhof (AT); Gremlica, Martin, 79804 Detkovice (CZ)
(74) Vertreter: Patentanwaltskanzlei Matschnig & Forsthuber OG

(57) **Zusammenfassung**

Die Erfindung betrifft eine Beleuchtungsvorrichtung (100) für eine Kraftfahrzeugleuchte, welche einen plattenförmigen transparenten Lichtleitkörper (1) umfasst. Lichtquellen (2) sind an einer Schmalseite (12) angeordnet sind, über welche das von den Lichtquellen emittierte Licht in den Lichtleitkörper (1) eintritt und sich in diesem in einer ersten Lichthauptausbreitungsrichtung (X₁) zur gegenüberliegenden Schmalseite fortpflanzt. An der vorderen Hauptfläche (10) wird zumindest ein Teil der auf sie auftreffenden Lichtstrahlen (S1) des sich in die erste Lichthauptausbreitungsrichtung (X₁) fortpflanzenden Lichtes totalreflektiert, sodass dieses auf eine hintere Hauptfläche auftreffen kann. Die hintere Hauptfläche (11) weist eine Auskoppelstruktur (111) auf, wobei zumindest ein Teil der an der vorderen Hauptfläche (10) totalreflektierten Lichtstrahlen (S1'), welche auf die hintere Hauptfläche (11) auftreffen, über die Auskoppelstruktur (111) aus dem Lichtleitkörper (1) austreten. Gegenüber der hinteren Hauptfläche (11)ist eine Reflektorfläche (40) angeordnet, wobei die Reflektorfläche (40) derart ausgebildet ist, dass aus der hinteren Hauptfläche (11) austretende und auf der Reflektorfläche (40) auftreffende Lichtstrahlen (S1") von der Reflektorfläche (40) in Richtung des Lichtleitkörpers (1) in eine zweite Lichtausbreitungsrichtung (X₂) umgelenkt werden, und die umgelenkten Lichtstrahlen (S1′′′) durch die hintere Hauptfläche (11) und die vordere Hauptfläche (10) des Lichtleitkörpers (1) durchtreten und in einen Bereich vor der Beleuchtungsvorrichtung (100) zur Bildung einer Lichtverteilung (LV) abgestrahlt werden. Die Auskoppelstruktur (111) ist dabei in der hinteren Hauptfläche (11) in Form von Profilvertiefungen ausgebildet ist oder in Form von Profilerhöhungen (11"), welche von der hinteren Hauptfläche (11) abstehen, wobei die Reflektorfläche (40) aus Reflektorteilflächen (41) gebildet ist, wobei jeder Profilvertiefung bzw. jeder Profilerhöhung (11") eine Reflektorteilfläche (41) gegenüberliegt, und wobei die Reflektorteilflächen (41) in Querschnittsflächen (E_{R}) normal auf ihre Längsrichtung (R_{R}) konkav ausgebildet sind, insbesondere als konkave Vertiefungen in einem Reflektorelement (4).

## Beschreibung

Die Erfindung betrifft eine Beleuchtungsvorrichtung für eine Kraftfahrzeugleuchte, wobei die Beleuchtungsvorrichtung umfasst:
einen, insbesondere plattenförmigen, transparenten Lichtleitkörper, wobei der Lichtleitkörper von zwei einander gegenüberliegenden Hauptflächen, einer vorderen Hauptfläche und einer hinteren Hauptfläche sowie Seitenflächen begrenzt ist, eine oder mehrere Lichtquellen, wobei die Lichtquellen an zumindest einer Schmalseite angeordnet sind, wobei das von einer Lichtquelle ausgehende Licht in den Lichtleitkörper über die Schmalseite, an welcher die Lichtquelle angeordnet ist, eintritt und sich in dem Lichtleitkörper im Wesentlichen in einer ersten Lichthauptausbreitungsrichtung zu jener Schmalseite, welche der Schmalseite, über welche das Licht der Lichtquelle eintritt, gegenüberliegt, fortpflanzt.

Mit einem solchen plattenförmigen Lichtleitkörper können dünne Leuchtmodule mit hoher Oberflächenhomogenität hergestellt werden, welche mittlerweile als OLED-Alternative verwendet werden. Die meisten bereits bekannten Lösungen basieren auf einer dünnen Platte mit LED's, deren Licht in den Rand der Platte einkoppelt wird, wobei das Licht aus der Platte in die gewünschte Richtung entkoppelt wird, normalerweise senkrecht zur Plattenoberfläche/vorderen Hauptfläche. Bei den bereits bekannten Vorrichtungen ist allerdings das von der Platte entkoppelte Licht nicht sehr homogen und erfordert zusätzliche Diffusionsschichten, um die gewünschte OLED-ähnliche Homogenität zu erreichen. Die nicht sehr effektive Methode der Lichtauskopplung mit zusätzlichen Diffusionsschichten führt dazu, dass starke Signalfunktionen wie STOP, TURN oder DRL nur sehr schwer erfüllt werden können oder nur, wenn die vordere Hauptfläche bzw. Lichtaustrittsfläche der Platte eine große Fläche aufweist.

Es ist eine Aufgabe der Erfindung, eine Beleuchtungsvorrichtung mit einem plattenförmigen Lichtleitkörper bereitzustellen, welche über ein möglichst dünnes Design bei gleichzeitig hoher Oberflächenhomogenität verfügt.

Diese Aufgabe wird mit einer eingangs genannten Beleuchtungsvorrichtung gelöst, bei welcher die vordere Hauptfläche derart ausgebildet ist, dass zumindest ein Teil, vorzugsweise alle der auf die vordere Hauptfläche auftreffenden Lichtstrahlen des sich im Wesentlichen in die erste Lichthauptausbreitungsrichtung fortpflanzenden Lichtes an der vorderen Hauptfläche totalreflektiert werden, sodass diese auf die hintere Hauptfläche auftreffen können, und wobei die hintere Hauptfläche eine Auskoppelstruktur aufweist, und wobei zumindest ein Teil der an der vorderen Hauptfläche totalreflektierten Lichtstrahlen, welche auf die hintere Hauptfläche auftreffen, über die Auskoppelstruktur aus dem Lichtleitkörper austreten, und wobei der hinteren Hauptfläche gegenüber eine Reflektorfläche angeordnet ist, wobei die Reflektorfläche derart ausgebildet ist, dass aus der hinteren Hauptfläche austretende und auf der Reflektorfläche auftreffende Lichtstrahlen von der Reflektorfläche in Richtung des Lichtleitkörpers, insbesondere im Wesentlichen in eine zweite Lichtausbreitungsrichtung, umgelenkt werden, und die umgelenkten Lichtstrahlen durch die hintere Hauptfläche und die vordere Hauptfläche des Lichtleitkörpers durchtreten und in einen Bereich vor der Beleuchtungsvorrichtung zur Bildung einer Lichtverteilung abgestrahlt werden, wobei die Auskoppelstruktur in der hinteren Hauptfläche in Form von Profilvertiefungen ausgebildet ist oder in Form von Profilerhöhungen, welche von der hinteren Hauptfläche abstehen, ausgebildet ist, wobei die Reflektorfläche aus Reflektorteilflächen gebildet ist, wobei jeder Profilvertiefung bzw. jeder Profilerhöhung eine Reflektorteilfläche gegenüberliegt, und wobei die Reflektorteilflächen in Querschnittsflächen normal auf ihre Längsrichtung konkav ausgebildet sind, insbesondere als konkave Vertiefungen in einem Reflektorelement.

Die Formulierung "im Wesentlichen in eine Lichtausbreitungsrichtung" soll dabei zum Ausdruck bringen, dass der resultierende Richtungsvektor des jeweiligen Lichtbündels in diese Richtung gerichtet ist, die einzelnen Lichtstrahlen können von dieser Richtung allerdings abweichen.

Vorzugsweise sind die erste Lichtausbreitungsrichtung und die zweite Lichtausbreitungsrichtung orthogonal zueinander.

Mit der vorliegenden erfindungsgemäßen Ausgestaltung kann eine in Lichtausbreitungsrichtung betrachtet sehr dünne Anordnung realisiert werden, bei welcher gleichzeitig sichergestellt werden kann, dass die vordere Hauptfläche, über welche das von den Lichtquellen eingekoppelte Licht in die gewünschte Lichtausbreitungsrichtung abgestrahlt wird, Licht möglichst homogen abstrahlt.

Vorzugsweise ist vorgesehen, dass die hintere Hauptfläche aus einer ebenen Fläche gebildet ist.

Weiters kann vorgesehen sein, dass eine Schmalseite, welche einer Schmalseite gegenüberliegt, über welche eine oder mehrere Lichtquellen Licht in den Lichtleitkörper einkoppeln, als retroreflektierend bzw. als Retroreflektor ausgebildet ist, sodass zumindest ein Teil des sich im Lichtleitkörper fortpflanzenden Lichtes, welches auf die retroreflektierende Schmalseite auftrifft, in den Lichtleitkörper zurück reflektiert, insbesondere totalreflektiert wird.

Auf diese Weise kann das in den Lichtleitkörper eingekoppelte Licht möglichst effizient genutzt werden.

Es kann vorgesehen sein, dass alle Lichtquellen genau an einer Schmalseite angeordnet sind.

Im Fall von mehreren Lichtquellen an einer Schmalseite ist vorzugsweise vorgesehen, dass diese nebeneinander, entlang einer Längserstreckung der Schmalseite angeordnet sind, wobei vorzugsweise die Lichtquellen derart angeordnet sind, dass die Haupt-Lichtaustrittsrichtungen des aus den Lichtquellen austretenden Lichtes zueinander parallel verlaufen.

Es kann vorgesehen sein, dass die Auskoppelstruktur erste Flächen, insbesondere ebene erste Flächen, welche orthogonal zu der zweiten Lichtausbreitungsrichtung angeordnet sind, und zweite Flächen, insbesondere ebene zweite Flächen umfasst, welche nicht orthogonal zu der zweiten Lichtausbreitungsrichtung, beispielsweise parallel zu der zweiten Lichtausbreitungsrichtung angeordnet sind.

Es kann vorgesehen sein, dass die Profilvertiefungen oder Profilerhöhungen quer zu der ersten Lichtausbreitungsrichtung, insbesondere orthogonal zu der ersten Lichtausbreitungsrichtung verlaufen.

Vorzugsweise verlaufen diese weiters auch quer zur zweiten Lichtausbreitungsrichtung und insbesondere auch im Wesentlichen orthogonal dazu.

Bevorzugt erstrecken sich Profilvertiefungen oder Profilerhöhungen hinsichtlich ihrer Längserstreckung über eine gesamte erste Breite, d.h. von einer Schmalseite bis zu der dieser Schmalseite gegenüberliegenden Schmalseite, und/oder es sind über eine gesamte zweite Breite, die sich von einer Schmalseite bis zu der dieser Schmalseite gegenüberliegenden Schmalseite erstreckt, Profilvertiefungen oder Profilerhöhungen in oder an der ebenen Fläche vorgesehen.

Licht, das auf die Profilvertiefungen bzw. Profilerhöhungen auftrifft, kann über diese nach hinten aus dem Lichtleitkörper austreten. Wäre die Lichtleitkörper an der hinteren Hauptfläche z.B. durchgehend als ebene Fläche ausgebbildet, würde der Großteil des Lichts totalreflektiert werden und nicht aus dem Lichtleitkörper austreten.

Insbesondere kann vorgesehen sein, dass
- alle Profilvertiefungen bzw. alle Profilerhöhungen hinsichtlich ihrer Höhe und/oder ihrer Breite identisch ausgebildet sind, und/oder
- alle Profilvertiefungen bzw. Profilerhöhungen jeweils zu ihrer benachbarten Profilvertiefungen bzw. Profilerhöhungen denselben Abstand zueinander aufweisen, und/ oder
- alle Profilvertiefungen bzw. alle Profilerhöhungen parallel zueinander verlaufen.

Weiters ist bevorzugt vorgesehen, dass sich jede Reflektorteilfläche hinsichtlich ihrer Längserstreckung über die gesamte Längserstreckung der zugeordneten Profilvertiefung bzw. Profilerhöhung erstreckt, und wobei vorzugsweise die Reflektorteilflächen in Längsrichtung parallel zu einer Längsrichtung der zugeordneten Profilvertiefung bzw. Profilerhöhung verläuft.

Weiters kann vorgesehen sein, dass in Querschnittsflächen normal auf die Längsrichtung der Reflektorteilflächen die Profilvertiefungen bzw. Profilerhöhungen jeweils in Bezug auf eine Symmetriegerade der ihnen zugeordneten Reflektorteilfläche spiegelsymmetrisch ausgebildet sind.

Es kann vorgesehen sein, dass die Profilvertiefungen bzw. Profilerhöhungen einen rechteckigen, quadratischen oder trapezförmigen Querschnitt aufweisen.

Weiters kann vorgesehen sein, dass in den Querschnittsflächen die Reflektorteilflächen Parabelform aufweisen.

Auf diese Weise können die reflektierten Lichtstrahlen parallel gerichtet werden.

Weiters ist mit Vorteil vorgesehen, dass alle Reflektorteilflächen hinsichtlich ihrer Form identisch ausgebildet sind, und/oder benachbarte Reflektorteilflächen unmittelbar aneinander angrenzen und beispielsweise jeweils z.B. in einer gemeinsamen Kante zusammenlaufen.

Außerdem kann vorgesehen sein, dass in der zweiten Lichthauptausbreitungsrichtung betrachtet nach dem Lichtleitkörper ein transparentes, plattenförmiges Lichtformungselement angeordnet ist, welches eine Lichtformungsstruktur mit einer Vielzahl an Facetten aufweist, welche jeweils eine Neigung zur zweiten Lichthauptabstrahlrichtung aufweisen.

Mit diesem Lichtformungselement kann einerseits eine weitere Verbesserung der Homogenität des Lichtes erfolgen, und andererseits kann durch die Lichtformungsstruktur auch eine gezielte Lenkung des Lichtes in eine gewünschte Richtung oder in einen gewünschten Bereich erfolgen.

Beispielsweise ist in diesem Zusammenhang vorgesehen, dass der Flächenvektor einer Facette einen ersten, z.B. horizontalen Neigungswinkel und einen zweiten, z.B. vertikalen Neigungswinkel zur zweiten Lichthauptabstrahlrichtung einschließt, wobei die Neigungswinkel aller Facetten derart verteilt sind, dass die horizontalen Neigungswinkel und die vertikalen Neigungswinkel jeweils um einen Erwartungswert verteilt sind, wobei der Erwartungswert derart mit dem Lichtstärkemaximum der Lichtverteilung korrespondiert, dass Lichtstrahlen, welche über Facetten, die einen horizontalen und vertikalen Neigungswinkel entsprechend dem Erwartungswert aufweisen, in das Lichtformungselement einkoppeln und/oder aus dem Lichtleitkörper auskoppeln, das Lichtstärkemaximum der Lichtverteilung bilden, wobei die Lichtformungsstruktur eine Lichteintrittsseite und/oder eine Lichtaustrittsseite des Lichtformungselement bildet.

Die Facetten können derart angeordnet sein, dass sie in Bezug auf ihre jeweiligen Neigungen im Wesentlichen homogen auf der Lichteintrittsseite und/oder Lichtaustrittsseite des Lichtformungselementes verteilt sind.

Weiters kann vorgesehen sein, dass die vordere Hauptfläche des Lichtleitkörpers eine ebene Fläche ist, welche vorzugsweise parallel zu der ebenen Fläche der zweiten Hauptfläche verläuft.

Beispielsweise kann vorgesehen sein, dass in der zweiten Lichthauptausbreitungsrichtung betrachtet nach dem Lichtformungselement ein zweiter, transparenter, plattenförmiger Lichtleitkörper angeordnet ist, wobei vorzugsweise der zweite Lichtleitkörper derart ausgebildet ist, dass von der Reflektorfläche kommende Lichtstrahlen beim Durchtritt durch den zweiten Lichtleitkörper gestreut werden.

Insbesondere kann dabei vorgesehen sein, dass ein oder mehrere weitere, sogenannte zweite Lichtquellen vorgesehen sind, welche über eine oder mehrere Schmalflächen des zweiten Lichtleitkörpers Licht in den zweiten Lichtleitkörper einkoppeln, und wobei der zweite Lichtleitkörper derart ausgebildet ist, dass von der einen oder den mehreren zweiten Lichtquellen eingekoppeltes Licht von dem Lichtleitkörper gestreut wird und in einer von der Reflektorfläche abgewandten Richtung aus dem Lichtleitkörper austritt.

Mit dieser Anordnung kann eine weitere, zweite Lichtfunktion realisiert werden, beispielsweise als Designelement oder als Lichtfunktion, die keine hohen Anforderungen an Intensität oder Homogenität aufweist, z.B. als Positionslicht oder Rücklicht.

Die zweiten Lichtquellen und die (ersten) Lichtquellen sind dabei vorzugsweise unabhängig voneinander ansteuerbar.

Licht der ersten Lichtquellen wird ebenfalls gestreut und es wird diffuses Licht erzeugt, durch die beschriebenen Facetten kann aber trotzdem ein gezieltes Maximum in der Intensitätsverteilung erreicht werden.

Die vorliegende Erfindung kombiniert in dieser optionalen Ausgestaltung einen neuen Ansatz für ein effektives optisches System zur Lichtentkopplung, einen kristalloptischen Modulator und ein volumenstreuendes Material. Jede Funktion kann durch das beleuchtete Erscheinungsbild unterschieden werden, z. B. bietet das Heck eine homogene beleuchtete Oberfläche, wenn beispielsweise auf STOP geschaltet wird, hat dieselbe Beleuchtungsvorrichtung ein kristallines Erscheinungsbild und kann die gesetzlichen Anforderungen für ein STOP-Signal erfüllen.

Bevorzugt ist noch vorgesehen, dass zwischen jeder Lichtquelle und dem Lichtleitkörper jeweils ein Lichteinkoppelelement angeordnet ist, wobei das von einer Lichtquelle austretende Licht in das dieser Lichtquelle zugeordnete Lichteinkoppelelement eintritt und von diesem in den Lichtleitkörper eingespeist wird, sodass sich das Licht in dem Lichtleitkörper im Wesentlichen in der ersten Lichthauptausbreitungsrichtung fortpflanzt.

Schließlich betrifft die Erfindung noch eine Kraftfahrzeugleuchte mit zumindest einer vorstehend beschriebenen Beleuchtungsvorrichtung.

Die Kraftfahrzeugleuchte kann z.B. als Kraftfahrzeugscheinwerfer oder Heckleuchte ausgebildet sein oder in einem Kraftfahrzeugscheinwerfer oder in einer Heckleuchte angeordnet sein.

Im Folgenden ist die Erfindung anhand der Zeichnung näher erörtert. In dieser zeigt
Fig. 1 eine perspektivische Ansicht einer Beleuchtungsvorrichtung für einen Kraftfahrzeugscheinwerfer von schräg vorne,
Fig. 2 eine Ansicht des in der Beleuchtungsvorrichtung aus Figur 1 verwendeten Lichtleitkörpers,
Fig. 3 eine Ansicht der in der Beleuchtungsvorrichtung aus Figur 1 verwendeten Reflektorfläche,
Fig. 4 einen Schnitt durch die Beleuchtungsvorrichtung entlang einer Ebene ER im Bereich des Lichtleitkörpers und der Reflektorfläche,
Fig. 5 einen Schnitt durch die gesamte Beleuchtungsvorrichtung entlang der Ebene ER,
Fig. 6 eine photometrische Darstellung einer Lichtverteilung erzeugt mittels der von dem Reflektor reflektierten Lichtstrahlen des von ersten Lichtquellen stammenden Lichtes,
Fig. 7 eine photometrische Darstellung einer Lichtverteilung erzeugt mittels zweiter Lichtquellen und Streuung des Lichtes an einem weiteren, zweiten Lichtleitkörper, und
Fig. 8 eine photometrische Darstellung einer Lichtverteilung erzeugt mittels der von dem Reflektor reflektierten Lichtstrahlen nach Durchtritt durch ein Lichtformungselement.

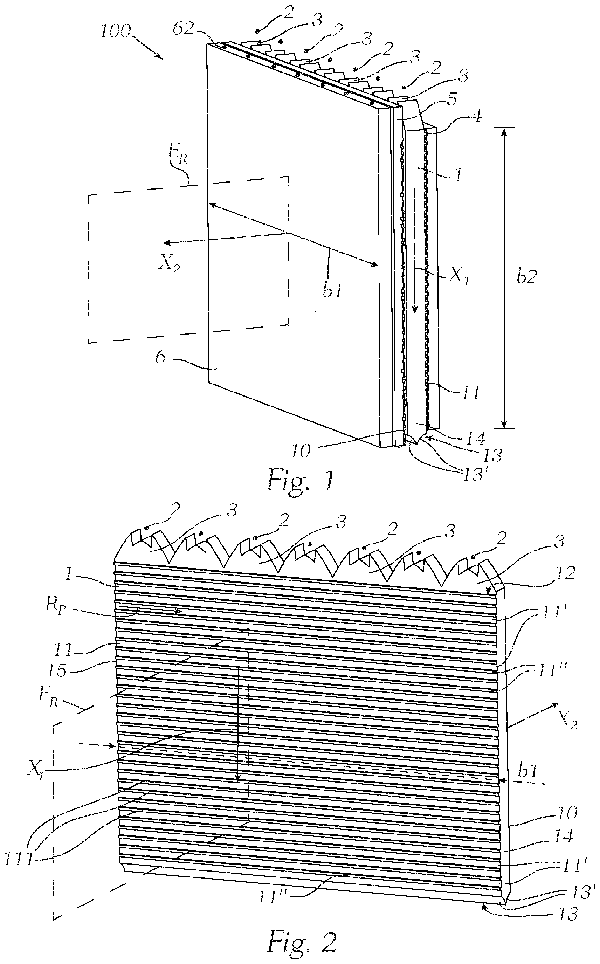

**Figur 1** zeigt eine Beleuchtungsvorrichtung 100 für eine Kraftfahrzeugleuchte, wobei die Beleuchtungsvorrichtung 100 einen, insbesondere plattenförmigen, aus einem optisch transparenten Material gebildeten Lichtleitkörper 1 umfasst, wobei der Lichtleitkörper 1, wie dies auch **Figur 2** zu entnehmen ist, von zwei einander gegenüberliegenden Hauptflächen, einer vorderen Hauptfläche 10 und einer hinteren Hauptfläche 11 sowie von Seitenflächen 12, 13, 14, 15 begrenzt ist. Vorzugsweise ist die vordere Hauptfläche 10 des Lichtleitkörpers 1 eine ebene Fläche und verläuft parallel zu einer ebenen Fläche 11' (siehe dazu die weiter untenstehenden Erläuterungen) der zweiten Hauptfläche 11.

Die Beleuchtungsvorrichtung 100 umfasst mehrere Lichtquellen 2, wobei die Lichtquellen 2 an einer Schmalseite 12 des Lichtleitkörpers 1 angeordnet sind. Das von den Lichtquellen 2 ausgehende Licht tritt über diese Schmalseite 12 in den Lichtleitkörper 1 ein und pflanzt sich in diesem im Wesentlichen in Richtung X₁ zu jener Schmalseite 13, welche der Schmalseite 12, über welche das Licht der Lichtquellen 2 eintritt, gegenüberliegt, der sogenannten ersten Lichthauptausbreitungsrichtung X₁, fort.

Bevorzugt ist wie dargestellt vorgesehen, dass zwischen jeder Lichtquelle 2 und dem Lichtleitkörper 1 jeweils ein Lichteinkoppelelement 3, etwa in Form eines Kollimators angeordnet ist, wobei das von einer Lichtquelle 2 emittierte Licht in das dieser Lichtquelle 2 zugeordnete Lichteinkoppelelement 3 eintritt und von diesem in den Lichtleitkörper 1 eingespeist wird, sodass sich das Licht in dem Lichtleitkörper 1 im Wesentlichen in der ersten Lichthauptausbreitungsrichtung X₁ fortpflanzt.

Dieses Lichteinkoppelelement 3 fängt einerseits das von der zugeordneten Lichtquelle 2 emittierte Licht möglichst vollständig ein, andererseits wird dieses Licht in Richtung der ersten Lichtausbreitungsrichtung X₁ ausgerichtet, allerdings derart, dass Lichtstrahlen bei ihrer Fortpflanzung in dem Lichtleitkörper 1 auf die vordere und hintere Hauptfläche 10, 11 auftreffen können, wobei an der vorderen Hauptfläche 10 zumindest ein Teil, vorzugsweise ein Großteil oder alle auftreffenden Lichtstrahlen totalreflektiert werden.

Vorzugsweise sind die Lichtquellen 2 nebeneinander, entlang einer Längserstreckung der Schmalseite 12 angeordnet, wobei die Lichtquellen 2 derart angeordnet sind, dass die Haupt-Lichtaustrittsrichtungen des aus den Lichtquellen 2 austretenden Lichtes zueinander parallel verlaufen.

Wie bereits beschrieben, ist die vordere Hauptfläche 10 derart ausgebildet bzw. angeordnet bzw. sind die geometrischen Zusammenhänge dergestalt, dass zumindest ein Teil, vorzugsweise alle der auf die vordere Hauptfläche 10 auftreffenden Lichtstrahlen S1 des sich im Wesentlichen in die erste Lichthauptausbreitungsrichtung X₁ (oder vorzugsweise auch entgegen der ersten Lichthauptausbreitungsrichtung, siehe weiter unten) fortpflanzenden Lichtes an der vorderen Hauptfläche 10 totalreflektiert werden und zu der hinteren Hauptfläche 11 gelangen können (Lichtstrahlen S1'), und wobei die hintere Hauptfläche 11 eine Auskoppelstruktur 111 aufweist, sodass zumindest ein Teil der an der vorderen Hauptfläche 10 totalreflektierten Lichtstrahlen S1', welche auf die hintere Hauptfläche 11 auftreffen, über diese Auskoppelstruktur 111 aus dem Lichtleitkörper 1 austreten.

Weiters umfasst die Beleuchtungsvorrichtung 100 eine der hinteren Hauptfläche 11 gegenüberliegende Reflektorfläche 40, wobei die Reflektorfläche 40 derart ausgebildet ist, dass aus der hinteren Hauptfläche 11 über die Auskoppelstruktur 111 austretende und auf der Reflektorfläche 40 auftreffende Lichtstrahlen S1" von der Reflektorfläche 40 in Richtung des Lichtleitkörpers 1, insbesondere im Wesentlichen in eine zweite Lichtausbreitungsrichtung X₂, umgelenkt werden, und die umgelenkten Lichtstrahlen S1‴ durch die hintere Hauptfläche 11 und die vordere Hauptfläche 10 des Lichtleitkörpers 1 durchtreten und in einen Bereich vor der Beleuchtungsvorrichtung 100 zur Bildung einer Lichtverteilung LV abgestrahlt werden.

Außerdem können gegebenenfalls auch Lichtstrahlen, die sich in die erste Lichthauptausbreitungsrichtung X₁ (oder vorzugsweise auch entgegen dieser Richtung, siehe weiter unten) fortpflanzen und direkt, d.h. ohne vorherige Totalreflexion an der vorderen Hauptfläche 10, auf die hintere Hauptfläche 11 auftreffen, aus dem Lichtleitkörper 1 austreten und an der Reflektorfläche 40 in die zweite Lichthauptausbreitungsrichtung X₂ reflektiert werden und zu der Lichtverteilung LV beitragen.

Wie in **Figur 1 & 2** dargestellt, ist mit Vorteil die jene Schmalseite 13, welche der Schmalseite 12 gegenüberliegt, über welche von den Lichtquellen 2 Licht in den Lichtleitkörper 1 eingekoppelt wird, retroreflektierend bzw. als Retroreflektor 13' ausgebildet ist, sodass zumindest ein Teil des sich im Lichtleitkörper 1 fortpflanzenden Lichtes, welches auf die retroreflektierende Schmalseite 13 auftrifft, in den Lichtleitkörper 1 zurück totalreflektiert wird und so genutzt werden kann, wenn dieses über die hintere Hauptfläche 10 aus dem Lichtleitkörper 1 austritt und von der Reflektoroberfläche 40 in die zweite Lichtausbreitungsrichtung X₂ reflektiert wird.

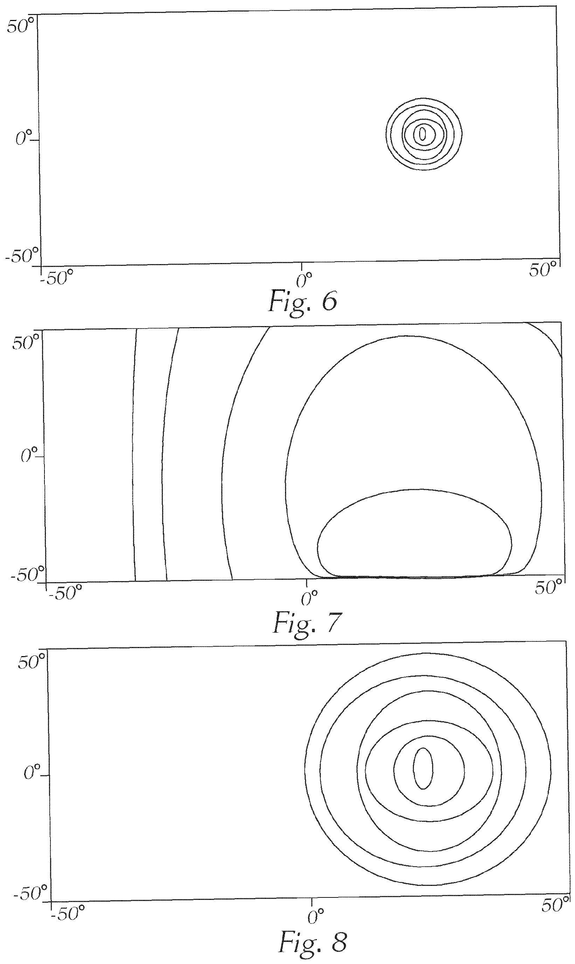

Figur 6 zeigt schematisch eine Lichtverteilung, die ausschließlich mit dem von der Reflektoroberfläche 40 reflektierten Licht erzeugt wird.

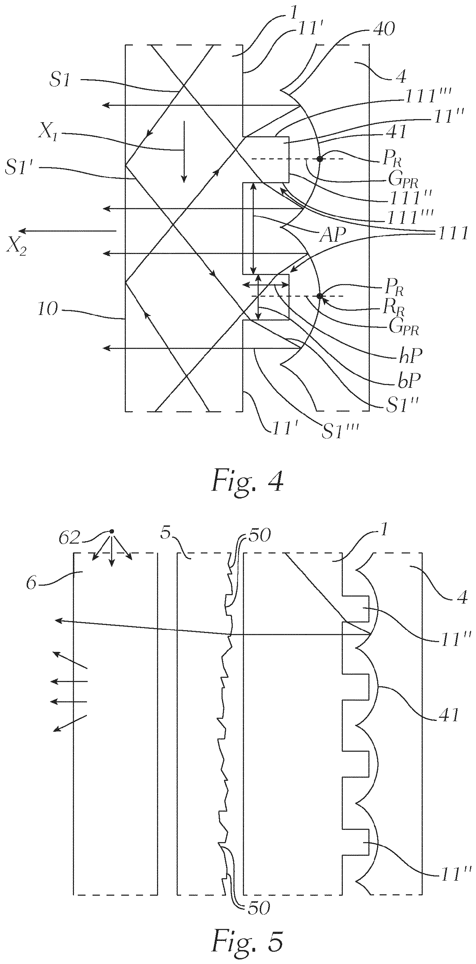

Wie insbesondere in **Figur 4** zu erkennen, weist die Auskoppelstruktur 111 der hinteren Hauptfläche 11 Profilerhöhungen 11" auf, welche von der hinteren Hauptfläche 11 abstehen. In dem gezeigten Beispiel ist hintere Hauptfläche 11, wie oben schon erwähnt, als ebene Fläche 11' ausgebildet, von welcher diese Profilerhöhungen 11" abstehen.

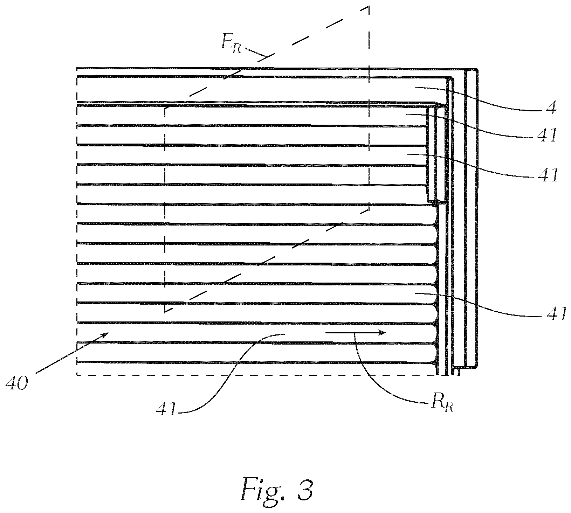

Die Reflektorfläche 40 ist vorzugsweise, wie in **Figur 3** gezeigt, an einem Reflektorelement bzw. Reflektorkörper 4 ausgebildet. Die Reflektorfläche 40 ist aus Reflektorteilflächen 41 gebildet, wobei jeder Profilerhöhung 11" eine Reflektorteilfläche 41 gegenüberliegt.

Vorzugsweise handelt es sich bei der Reflektoroberfläche 40 um einen verspiegelten, z.B. metallisierter Reflektor.

Wie in **Figur 4** gezeigt, sind beispielsweise die Reflektorteilflächen 41 in Querschnittsflächen E_{R}, die insbesondere vertikal verlaufen, normal auf ihre Längsrichtung R_{R}, konkav ausgebildet sind, insbesondere als konkave Vertiefungen in dem Reflektorelement 4.

Die Reflektorfläche 40, insbesondere die Reflektorteilflächen 41, sind derart ausgebildet, dass auf sie auftreffendes Licht in die zweite Lichthauptausbreitungsrichtung X₂ reflektiert wird. Die zweite Lichthauptausbreitungsrichtung X₂ verläuft beispielsweise orthogonal zu der ebenen Fläche 11' der hinteren Hauptfläche 11 und/oder orthogonal zu der ersten Lichthauptausbreitungsrichtung X₁.

Dementsprechend kann das von den Reflektorteilflächen 41 reflektierte Licht über die ebene Fläche 11' der hinteren Hauptfläche 11 in den Lichtleitkörper 1 eintreten und sich durch diese zu der vorderen Hauptfläche 10 ohne Ablenkung der Ausbreitungsrichtung fortpflanzen, wo es aus dem Lichtleitkörper 1 wieder austritt.

Es kann vorgesehen sein, dass die Auskoppelstruktur 111 eben erste Flächen 111" aufweist, welche orthogonal zu der zweiten Lichtausbreitungsrichtung X₂ angeordnet sind, sowie zweite Flächen, insbesondere ebene zweite Flächen 111"' (Seitenflächen), welche nicht orthogonal zu der zweiten Lichtausbreitungsrichtung X₂, beispielsweise parallel zu der zweiten Lichtausbreitungsrichtung X₂, angeordnet sind.

Konkret ist in dem gezeigten Beispiel vorgesehen, dass die Profilerhöhungen 11" einen rechteckigen oder quadratischen Querschnitt aufweisen.

Vorzugsweise ist die Ausgestaltung derart, dass Licht nur auf die seitlichen Flächen des jeweiligen Reflektors 41 auftrifft, nicht aber auf eine Fläche des Reflektors, welche der ebenen ersten Fläche 111" der Profilerhöhung 11" gegenüberliegt. Dies wird dadurch erreicht, dass die Ausgestaltung derart ist, dass Licht hauptsächlich oder vorzugsweise ausschließlich an den Seitenflächen (zweiten Flächen 111'") der Profilerhöhungen 11" augekoppelt wird, damit es vom insbesondere parabolischen Reflektor 41 parallel gerichtet wird.

Die Profilerhöhungen 11" verlaufen beispielsweise, wie gezeigt (**Figur 2**) quer zu der ersten Lichtausbreitungsrichtung X₁, insbesondere orthogonal zu der ersten Lichtausbreitungsrichtung X₁. Außerdem verlaufen diese vorzugsweise weiters auch quer zur zweiten Lichtausbreitungsrichtung X₂ und insbesondere auch im Wesentlichen orthogonal dazu.

Bevorzugt erstrecken sich die Profilerhöhungen 11" hinsichtlich ihrer Längserstreckung über eine gesamte erste Breite b1 des Lichtleitkörpers 1, d.h. von einer Schmalseite 14 bis zu der dieser Schmalseite 14 gegenüberliegenden Schmalseite 15, außerdem sind sie vorzugsweise über eine gesamte zweite Breite (bzw. Höhe) b2, die sich von der Schmalseite 12 mit den Lichtquellen 2 bis zu der dieser Schmalseite 12 gegenüberliegenden Schmalseite 13 erstreckt, angeordnet.

Wie schon beschrieben, kann Licht, das auf die Profilerhöhungen 11" auftrifft, über diese nach hinten aus dem Lichtleitkörper austreten. Wäre der Lichtleitkörper 1 an der hinteren Hauptfläche z.B. durchgehend als ebene Fläche ausgebildet, würde der Großteil des Lichts totalreflektiert werden und nicht aus dem Lichtleitkörper 1 austreten.

Weiters ist vorzugsweise vorgesehen, dass, alle Profilerhöhungen 11" hinsichtlich ihrer Höhe hP und/oder ihrer Breite bP identisch ausgebildet sind. Vorzugsweise weisen die Profilerhöhungen jeweils zu ihren benachbarten Profilerhöhungen denselben Abstand AP auf. Insbesondere verlaufen alle Profilerhöhungen parallel zueinander. (siehe **Figur 4**)

Hinsichtlich der Reflektorteilflächen 41 ist, wie dies unter anderem aus **Figur 3** erkennbar ist, mit Vorteil noch vorgesehen, dass sich jede Reflektorteilfläche 41 hinsichtlich ihrer Längserstreckung über die gesamte Längserstreckung der zugeordneten Profilerhöhung 11" erstreckt, wobei vorzugsweise jede Reflektorteilfläche 41 in Längsrichtung R_{R} parallel zu einer Längsrichtung R_{P} der ihr zugeordneten Profilerhöhung 41 verläuft.

Weiter ist bevorzugt vorgesehen, dass in Querschnittsflächen E_{R} normal auf die Längsrichtung R_{R} der Reflektorteilflächen 41 die Profilerhöhungen 11" jeweils in Bezug auf eine Symmetriegerade G_{PR} (**Figur 4****)** der ihnen zugeordneten Reflektorteilfläche 41 spiegelsymmetrisch ausgebildet sind.

Die Reflektorteilfläche 41 selbst ist in der Querschnittsfläche E_{R} (d.h. die sich ergebende Schnittkurve durch Schneiden der Reflektorteilfläche 41 mit der Querschnittsfläche E_{R}) in Bezug auf eine Symmetriegerade G_{PR}, welche die Reflektorteilfläche 41 in der Querschnittsfläche E_{R} in einem Punkt P_{R} schneidet und normal auf die Schnittkurve steht, spiegelsymmetrisch.

Bevorzugt ist vorgesehen, dass in den Querschnittsflächen E_{R} die Reflektorteilflächen 41 Parabelform aufweisen. Auf diese Weise können die reflektierten Lichtstrahlen parallel gerichtet werden.

Analog zu den Profilerhöhungen 11" ist mit Vorteil vorgesehen, wenn alle Reflektorteilflächen 41 hinsichtlich ihrer Form identisch ausgebildet sind, wobei benachbarte Reflektorteilflächen 41 vorzugsweise unmittelbar aneinander angrenzen und beispielsweise jeweils z.B. in einer gemeinsamen Kante zusammenlaufen.

Wie in **Figur 1** und insbesondere auch in **Figur 5** gezeigt ist, kann zusätzlich noch vorgesehen sein, dass in der zweiten Lichthauptausbreitungsrichtung X₂ betrachtet nach dem Lichtleitkörper 1 ein weiteres transparentes, plattenförmiges Lichtformungselement 5 ("zusätzliches erstes Lichtformungselement") angeordnet ist, welches eine Lichtformungsstruktur mit einer Vielzahl an Facetten 50 aufweist, welche jeweils eine Neigung zur zweiten Lichthauptabstrahlrichtung X₂ aufweisen.

Mit diesem Lichtformungselement kann einerseits eine weitere Verbesserung der Homogenität des Lichtes erfolgen, und andererseits kann durch die Lichtformungsstruktur auch eine gezielte Lenkung des Lichtes in eine gewünschte Richtung oder in einen gewünschten Bereich erfolgen. **Figur 8** zeigt schematisch eine Lichtverteilung erzeugt mit dem von der Reflektoroberfläche 40 kommenden Licht nach Durchtritt durch das zusätzliche erste Lichtformungselement 5. Zu erkennen ist, dass ein Maximum in der Lichtverteilung beibehalten wird, das Licht aber in einen größeren Winkelbereich abgestrahlt wird.

Beispielsweise handelt es sich bei den einzelnen Facetten 50 jeweils um ebene (transparente) Flächen, und der Flächenvektor einer Facette schließt einen ersten, z.B. horizontalen Neigungswinkel und einen zweiten, z.B. vertikalen Neigungswinkel zur zweiten Lichthauptabstrahlrichtung X₂ ein, wobei die Neigungswinkel aller Facetten derart verteilt sind. Es kann vorgesehen sein, dass die horizontalen Neigungswinkel und die vertikalen Neigungswinkel bzw. die Werte dieser Neigungswinkel jeweils um einen Erwartungswert verteilt sind, wobei der Erwartungswert derart mit dem Lichtstärkemaximum der Lichtverteilung LV korrespondiert, dass Lichtstrahlen, welche über Facetten, die einen horizontalen und vertikalen Neigungswinkel entsprechend dem Erwartungswert aufweisen, in das Lichtformungselement 5 einkoppeln und/oder aus dem Lichtleitkörper auskoppeln, das Lichtstärkemaximum der Lichtverteilung bilden, wobei die Lichtformungsstruktur eine Lichteintrittsseite und/oder eine Lichtaustrittsseite des Lichtformungselement 5 bildet.

Die Facetten können derart angeordnet sein, dass sie in Bezug auf ihre jeweiligen Neigungen im Wesentlichen homogen auf der Lichteintrittsseite und/oder Lichtaustrittsseite des Lichtformungselementes 5 verteilt sind.

Mit dem Lichtformungselement 5 kann das einfallende, kollimierte, von Reflektoroberfläche kommende Licht in eine gewünschte Lichtverteilung, z.B. für eine Stop-Lichtfunktion oder eine Abbiege-Lichtfunktion moduliert werden.

Weiters kann noch vorgesehen sein, dass in der zweiten Lichthauptausbreitungsrichtung X₂ betrachtet nach dem Lichtformungselement 5 ein zweiter, transparenter, plattenförmiger Lichtleitkörper 6 ("zusätzlicher zweiter Lichtleitkörper") angeordnet ist, wobei vorzugsweise der zweite Lichtleitkörper 6 derart ausgebildet ist, dass von der Reflektorfläche 40 kommende Lichtstrahlen (und durch den Lichtleitkörper 5 durchgetretene Lichtstrahlen) beim Durchtritt durch diesen zweiten Lichtleitkörper 6 gestreut werden.

Insbesondere kann dabei vorgesehen sein, dass ein oder mehrere weitere, sogenannte zweite Lichtquellen 62 vorgesehen sind, welche über eine oder mehrere Schmalflächen des zweiten Lichtleitkörpers 6 Licht in den zweiten Lichtleitkörper 6 einkoppeln, und wobei der zweite Lichtleitkörper 6 derart ausgebildet ist, dass von der einen oder den mehreren zweiten Lichtquellen 62 eingekoppeltes Licht von dem Lichtleitkörper 6 gestreut, insbesondere stark gestreut wird und zumindest teilweise in einer von der Reflektorfläche 40 abgewandten Richtung aus dem Lichtleitkörper 6 austritt. Die zweite Lichtleitkörper 6 weist dabei z.B. eine Optik mit streuenden Elementen, insbesondere Volumenelementen, oder eine streuende, z.B. aufgeraute Oberfläche auf.

Licht, welches von der Reflektoroberfläche 40 kommt, wird zwar ebenfalls in einem (geringeren Ausmass) von dem zweiten Lichtleitkörper 6 gestreut wird, während das Licht der Lichtquellen 62 des zweiten Lichtleitkörpers 62 stark gestreut wird, sodass diese Lichtquellen 62 eine leuchtende Fläche erzeugen.

Damit kann z.B. die Beleuchtungsvorrichtung als Designelement verwendet werden oder zur Erzeugung einer (zusätzlichen) Lichtfunktion, die keine hohen Anforderungen an Intensität oder Homogenität aufweist, z.B. Positionslicht oder Rücklicht.

Das von der Reflektoroberfläche 40 kommende Licht wird zwar ebenfalls gestreut, durch die vorhergehende Formung durch das Lichtformungselement 5 kann aber trotzdem ein gezieltes Maximum in der Intensitätsverteilung realisiert werden.

Mit dieser Anordnung kann somit eine weitere, zweite Lichtfunktion realisiert werden, beispielsweise als Designelement oder als Lichtfunktion, die keine hohen Anforderungen an Intensität oder Homogenität aufweist, z.B. als Positionslicht oder Rücklicht.

Die zweiten Lichtquellen und die (ersten) Lichtquellen sind dabei vorzugsweise unabhängig voneinander ansteuerbar.

Licht der ersten Lichtquellen wird ebenfalls gestreut und es wird diffuses Licht erzeugt, durch die beschriebenen Facetten und die parabolischen, die Lichtstrahlen parallel richtenden Reflektoren kann aber trotzdem ein gezieltes Maximum in der Intensitätsverteilung erreicht werden.

Die vorliegende Erfindung kombiniert in dieser optionalen Ausgestaltung einen neuen Ansatz für ein effektives optisches System zur Lichtentkopplung, einen kristalloptischen Modulator und ein volumenstreuendes Material. Jede Funktion kann durch das beleuchtete Erscheinungsbild unterschieden werden, z. B. bietet das Heck eine homogene beleuchtete Oberfläche, wenn beispielsweise auf STOP geschaltet wird, hat dieselbe Beleuchtungsvorrichtung ein kristallines Erscheinungsbild und kann die gesetzlichen Anforderungen für ein STOP-Signal erfüllen.

Der Lichtleitkörper 1 und die beiden weiteren Lichtleitkörper 5, 6 stimmen hinsichtlich ihrer ersten Breite (Breite b1 des Lichtleitkörpers 1) und ihrer zweiten Breite bzw. Höhe (zweite Breite b2 des Lichtleitkörpers 1) in etwa bzw. exakt überein und sind derart angeordnet, dass die jeweiligen Lichtaustrittsflächen zueinander parallel verlaufen, außerdem sind die Lichtleitkörper 1, 5, 6 derart angeordnet, dass sie sich abdecken. Benachbarte Lichtleitkörper 1, 5, 6 können jeweils einen Abstand größer Null zueinander aufweisen oder unmittelbar aneinander anliegen.

Mit der vorliegenden erfindungsgemäßen Ausgestaltung kann eine in Lichtausbreitungsrichtung betrachtet sehr dünne Anordnung realisiert werden, bei welcher gleichzeitig sichergestellt werden kann, dass die vordere Hauptfläche, über welche das von den Lichtquellen eingekoppelte Licht in die gewünschte Lichtausbreitungsrichtung abgestrahlt wird, Licht möglichst homogen abstrahlt.

Bei einer konkreten Ausgestaltung wie in den Figuren gezeigt können zumindest zwei Lichtfunktionen erzeugt werden, beispielsweise Heckleuchte oder Stop-Lichtfunktion und ein Abbiegelicht. Durch Verwendung von Lichtquellen an mehreren Schmalseiten eines Lichtleitkörpers 1, 6 kann die Lichtmenge erhöht werden oder es können an verschiedenen Schmalseiten unterschiedlich farbige Lichtquellen zum Einsatz kommen, um so über einen Lichtleitkörper unterschiedliche Lichtfunktionen realisieren zu können.

Mit der Erfindung lässt sich eine sehr dünne Beleuchtungsvorrichtung realisieren.

## Patentansprüche

1. Beleuchtungsvorrichtung (100) für eine Kraftfahrzeugleuchte, wobei die Beleuchtungsvorrichtung (100) umfasst:
einen, insbesondere plattenförmigen, transparenten Lichtleitkörper (1), wobei der Lichtleitkörper (1) von zwei einander gegenüberliegenden Hauptflächen, einer vorderen Hauptfläche (10) und einer hinteren Hauptfläche (11) sowie Seitenflächen (12, 13, 14, 15) begrenzt ist,
eine oder mehrere Lichtquellen (2), wobei die Lichtquellen (2) an zumindest einer Schmalseite (12) angeordnet sind, wobei das von einer Lichtquelle (2) ausgehende Licht in den Lichtleitkörper (1) über die Schmalseite (12), an welcher die Lichtquelle (2) angeordnet ist, eintritt und sich in dem Lichtleitkörper (1) im Wesentlichen in einer ersten Lichthauptausbreitungsrichtung (X₁) zu jener Schmalseite (13), welche der Schmalseite (12), über welche das Licht der Lichtquelle (2) eintritt, gegenüberliegt, fortpflanzt,
wobei die vordere Hauptfläche (10) derart ausgebildet ist, dass zumindest ein Teil, vorzugsweise alle der auf die vordere Hauptfläche (10) auftreffenden Lichtstrahlen (S1) des sich im Wesentlichen in die erste Lichthauptausbreitungsrichtung (X₁) fortpflanzenden Lichtes an der vorderen Hauptfläche (10) totalreflektiert werden, sodass diese auf die hintere Hauptfläche (11) auftreffen können, und
wobei die hintere Hauptfläche (11) eine Auskoppelstruktur (111) aufweist, und wobei zumindest ein Teil der an der vorderen Hauptfläche (10) totalreflektierten Lichtstrahlen (S1'), welche auf die hintere Hauptfläche (11) auftreffen, über die Auskoppelstruktur (111) aus dem Lichtleitkörper (1) austreten,
und wobei der hinteren Hauptfläche (11) gegenüber eine Reflektorfläche (40) angeordnet ist,
wobei die Reflektorfläche (40) derart ausgebildet ist, dass aus der hinteren Hauptfläche (11) austretende und auf der Reflektorfläche (40) auftreffende Lichtstrahlen (S1") von der Reflektorfläche (40) in Richtung des Lichtleitkörpers (1), insbesondere im Wesentlichen in eine zweite Lichtausbreitungsrichtung (X₂), umgelenkt werden, und die umgelenkten Lichtstrahlen (S1"') durch die hintere Hauptfläche (11) und die vordere Hauptfläche (10) des Lichtleitkörpers (1) durchtreten und in einen Bereich vor der Beleuchtungsvorrichtung (100) zur Bildung einer Lichtverteilung (LV) abgestrahlt werden, wobei
die Auskoppelstruktur (111) in der hinteren Hauptfläche (11) in Form von Profilvertiefungen ausgebildet ist oder in Form von Profilerhöhungen (11"), welche von der hinteren Hauptfläche (11) abstehen, ausgebildet ist, wobei
die Reflektorfläche (40) aus Reflektorteilflächen (41) gebildet ist, wobei jeder Profilvertiefung bzw. jeder Profilerhöhung (11") eine Reflektorteilfläche (41) gegenüberliegt, und
wobei die Reflektorteilflächen (41) in Querschnittsflächen (E_{R}) normal auf ihre Längsrichtung (R_{R}) konkav ausgebildet sind, insbesondere als konkave Vertiefungen in einem Reflektorelement (4).

2. Beleuchtungsvorrichtung (100) nach Anspruch 1, wobei die hintere Hauptfläche (11) aus einer ebenen Fläche (11') gebildet ist, und/oder wobei die vordere Hauptfläche (10) des Lichtleitkörpers (1) eine ebene Fläche ist, welche vorzugsweise parallel zu der bzw. einer ebenen Fläche (11') der zweiten Hauptfläche (11) verläuft.

3. Beleuchtungsvorrichtung nach Anspruch 1 oder 2, wobei eine Schmalseite (13), welche einer Schmalseite (12) gegenüberliegt, über welche eine oder mehrere Lichtquellen (2) Licht in den Lichtleitkörper (1) einkoppeln, als retroreflektierend bzw. als Retroreflektor (13') ausgebildet ist, sodass zumindest ein Teil des sich im Lichtleitkörper (1) fortpflanzenden Lichtes, welches auf die retroreflektierende Schmalseite (13) auftrifft, in den Lichtleitkörper (1) zurück reflektiert, insbesondere totalreflektiert wird.

4. Beleuchtungsvorrichtung nach einem der vorhergehenden Ansprüche, wobei alle Lichtquellen (2) genau an einer Schmalseite (12) angeordnet sind, wobei beispielsweise, im Fall von mehreren Lichtquellen (2) an einer Schmalseite (12), diese nebeneinander, entlang einer Längserstreckung der Schmalseite (12) angeordnet sind, wobei vorzugsweise die Lichtquellen (2) derart angeordnet sind, dass die Haupt-Lichtaustrittsrichtungen des aus den Lichtquellen (2) austretenden Lichtes zueinander parallel verlaufen.

5. Beleuchtungsvorrichtung nach einem der vorhergehenden Ansprüche, wobei die Auskoppelstruktur (111) erste Flächen, insbesondere erste ebene Flächen (111") umfasst, welche orthogonal zu der zweiten Lichtausbreitungsrichtung (X₂) angeordnet sind, und zweite Flächen, insbesondere ebene zweite Flächen (111‴) umfasst, welche nicht orthogonal zu der zweiten Lichtausbreitungsrichtung (X₂), beispielsweise parallel zu der zweiten Lichtausbreitungsrichtung (X₂) angeordnet sind.

6. Beleuchtungsvorrichtung nach einem der vorhergehenden Ansprüche, wobei die Profilvertiefungen oder Profilerhöhungen (11") quer zu der ersten Lichtausbreitungsrichtung (X₁), insbesondere orthogonal zu der ersten Lichtausbreitungsrichtung (X₁) verlaufen.

7. Beleuchtungsvorrichtung nach einem der vorhergehenden Ansprüche, wobei Profilvertiefungen oder Profilerhöhungen (11") sich hinsichtlich ihrer Längserstreckung über eine gesamte erste Breite (b1), d.h. von einer Schmalseite (14) bis zu der dieser Schmalseite (14) gegenüberliegenden Schmalseite (15) erstrecken, und/oder es sind über eine gesamte zweite Breite (b2), die sich von einer Schmalseite (12) bis zu der dieser Schmalseite (12) gegenüberliegenden Schmalseite (13) erstreckt, Profilvertiefungen oder Profilerhöhungen (11") in oder an der ebenen Fläche (11') vorgesehen.

8. Beleuchtungsvorrichtung nach einem der vorhergehenden Ansprüche, wobei
- alle Profilvertiefungen bzw. alle Profilerhöhungen hinsichtlich ihrer Höhe und/oder ihrer Breite identisch ausgebildet sind, und/oder
- alle Profilvertiefungen bzw. Profilerhöhungen jeweils zu ihrer benachbarten Profilvertiefungen bzw. Profilerhöhungen denselben Abstand zueinander aufweisen, und/ oder
- alle Profilvertiefungen bzw. alle Profilerhöhungen parallel zueinander verlaufen.

9. Beleuchtungsvorrichtung nach einem der vorhergehenden Ansprüche, wobei sich jede Reflektorteilfläche (41) hinsichtlich ihrer Längserstreckung über die gesamte Längserstreckung der zugeordneten Profilvertiefung bzw. Profilerhöhung erstreckt, und wobei vorzugsweise die Reflektorteilflächen (41) in Längsrichtung (R_{R}) parallel zu einer Längsrichtung (R_{P}) der zugeordneten Profilvertiefung bzw. Profilerhöhung (41) verläuft.

10. Beleuchtungsvorrichtung nach einem der vorhergehenden Ansprüche, wobei in Querschnittsflächen (E_{R}) normal auf die Längsrichtung (R_{R}) der Reflektorteilflächen (41) die Profilvertiefungen bzw. Profilerhöhungen (41) jeweils in Bezug auf eine Symmetriegerade (G_{PR}) der ihnen zugeordneten Reflektorteilfläche (41) spiegelsymmetrisch ausgebildet sind.

11. Beleuchtungsvorrichtung nach einem der vorhergehenden Ansprüche, wobei die Profilvertiefungen bzw. Profilerhöhungen (11") einen rechteckigen, quadratischen oder trapezförmigen Querschnitt aufweisen.

12. Beleuchtungsvorrichtung nach einem der vorhergehenden Ansprüche, wobei in den Querschnittsflächen (E_{R}) die Reflektorteilflächen (41) Parabelform aufweisen.

13. Beleuchtungsvorrichtung nach einem der vorhergehenden Ansprüche, wobei alle Reflektorteilflächen (41) hinsichtlich ihrer Form identisch ausgebildet sind, und/oder benachbarte Reflektorteilflächen (41) unmittelbar aneinander angrenzen und beispielsweise jeweils z.B. in einer gemeinsamen Kante zusammenlaufen.

14. Beleuchtungsvorrichtung nach einem der vorhergehenden Ansprüche, wobei in der zweiten Lichthauptausbreitungsrichtung (X₂) betrachtet nach dem Lichtleitkörper (1) ein transparentes, plattenförmiges Lichtformungselement (5) angeordnet ist, welches eine Lichtformungsstruktur mit einer Vielzahl an Facetten (50) aufweist, welche jeweils eine Neigung zur zweiten Lichthauptabstrahlrichtung (X₂) aufweisen, wobei
- vorzugsweise der Flächenvektor einer Facette einen ersten, z.B. horizontalen Neigungswinkel und einen zweiten, z.B. vertikalen Neigungswinkel zur zweiten Lichthauptabstrahlrichtung (X₂) einschließt, wobei die Neigungswinkel aller Facetten derart verteilt sind, dass die horizontalen Neigungswinkel und die vertikalen Neigungswinkel jeweils um einen Erwartungswert verteilt sind, wobei der Erwartungswert derart mit dem Lichtstärkemaximum der Lichtverteilung (LV) korrespondiert, dass Lichtstrahlen, welche über Facetten, die einen horizontalen und vertikalen Neigungswinkel entsprechend dem Erwartungswert aufweisen, in das Lichtformungselement (5) einkoppeln und/oder aus dem Lichtleitkörper auskoppeln, das Lichtstärkemaximum der Lichtverteilung bilden, wobei die Lichtformungsstruktur eine Lichteintrittsseite und/oder eine Lichtaustrittsseite des Lichtformungselement (5) bildet, und/oder
- wobei vorzugsweise die Facetten derart angeordnet sind, dass sie in Bezug auf ihre jeweiligen Neigungen im Wesentlichen homogen auf der Lichteintrittsseite und/oder Lichtaustrittsseite des Lichtformungselementes (5) verteilt sind.

15. Beleuchtungsvorrichtung nach einem der vorhergehenden Ansprüche, wobei in der zweiten Lichthauptausbreitungsrichtung (X₂) betrachtet nach dem Lichtformungselement (5) ein zweiter, transparenter, plattenförmiger Lichtleitkörper (6) angeordnet ist, wobei vorzugsweise der zweite Lichtleitkörper (6) derart ausgebildet ist, dass von der Reflektorfläche (40) kommende Lichtstrahlen beim Durchtritt durch den zweiten Lichtleitkörper (6) gestreut werden, wobei beispielsweise ein oder mehrere weitere, sogenannte zweite Lichtquellen (62) vorgesehen sind, welche über eine oder mehrere Schmalflächen des zweiten Lichtleitkörpers (6) Licht in den zweiten Lichtleitkörper (6) einkoppeln, und wobei der zweite Lichtleitkörper (6) derart ausgebildet ist, dass von der einen oder den mehreren zweiten Lichtquellen (62) eingekoppeltes Licht von dem Lichtleitkörper (6) gestreut wird und in einer von der Reflektorfläche (40) abgewandten Richtung aus dem Lichtleitkörper (6) austritt.

16. Beleuchtungsvorrichtung nach einem der vorhergehenden Ansprüche, wobei zwischen jeder Lichtquelle (2) und dem Lichtleitkörper (1) jeweils ein Lichteinkoppelelement (3) angeordnet ist, wobei das von einer Lichtquelle (2) austretende Licht in das dieser Lichtquelle (2) zugeordnete Lichteinkoppelelement (3) eintritt und von diesem in den Lichtleitkörper (1) eingespeist wird, sodass sich das Licht in dem Lichtleitkörper (1) im Wesentlichen in der ersten Lichthauptausbreitungsrichtung (X₁) fortpflanzt.

17. Kraftfahrzeugleuchte mit zumindest einer Beleuchtungsvorrichtung (100) nach einem der vorhergehenden Ansprüche, wobei beispielsweise die Kraftfahrzeugleuchte als Kraftfahrzeugscheinwerfer oder Heckleuchte ausgebildet ist oder in einem Kraftfahrzeugscheinwerfer oder in einer Heckleuchte angeordnet ist.
